# EUROPEAN PATENT SPECIFICATION

(11) **EP 1 738 640 B1**
(45) Date of publication and mention of the grant of the patent: **10.10.2007**
(21) Application number: 06075844.8
(22) Date of filing: 10.04.2006
(51) Int. Cl.: A01K 13/00, A46B 13/00

(54) **A device for brushing animals**
Bürsten für Tiere
Brosse pour animaux

(30) Priority: 29.06.2005 NL 1029371
(43) Date of publication of application: 03.01.2007
(73) Proprietor: Lely Enterprises AG, 6300 Zug (CH)
(72) Inventor: Otten, Martijn, 3036 LV Rotterdam (NL)
(74) Representative: Corten, Maurice Jean F.M.

(56) References cited:
- WO-A-03/084316
- DE-C1- 10 213 442
- US-A- 5 540 186
- US-B1- 6 318 298

## Description

The present invention relates to a device for brushing animals, such as cows, which device is provided with:
- a mounting unit for mounting the device to a stationary construction element, such as a wall or a beam,
- a pivot element, which is connected with the mounting unit,
- a frame, which is connected with the pivot element in such a way that it is pivotable about said pivot element, the frame comprising a hollow, internal space,
- a brushing unit, which is fastened on the frame, and comprises a driven axis, which extends into the hollow, internal space of the frame,
- a driving motor with a drive shaft for driving the brushing unit, and
- a transmission element disposed between the drive shaft of the driving motor and the driven axis of the brushing unit for transmitting rotation from the drive shaft to the driven axis, the transmission element being disposed in the hollow, internal space of the frame.

Such a device for brushing animals is known from USA patent 6,318,298 B1. In this known device, the driving motor is fastened near an end of the frame and the brushing unit is fastened near the other end of the frame. The driving motor has a drive shaft, which extends into the hollow space of the frame and which is connected with the driven axis of the brushing unit via a chain. Although this device functions properly, the device nevertheless proves to be subjected to relatively high maintenance costs.

It is inter alia an object of the present invention to provide a device for brushing animals which involves relatively low maintenance costs.

For this purpose, a device for brushing animals of the above-described type is characterized in that the driving motor is disposed in the hollow, internal space of the frame. The invention is based on the insight that, owing to the fact that the driving motor of the known device is fastened on the outside of the frame, said driving motor is subjected to all sorts of environmental contamination. In particular in a stable, this contamination can be considerable. It has been found that, as a result, the driving motor of the known device has to be cleaned and/or replaced frequently in order to guarantee a correct functioning of the device for brushing animals. This cleaning and/or replacement is not only time-consuming, but also unnecessarily costly. By disposing, according to the invention, the driving motor in the hollow, internal space of the frame, the driving motor is protected against contamination and, consequently, the maintenance costs are strongly reduced.

A preferred embodiment of the device for brushing animals according to the invention, in which the brushing unit is fastened near an end of the frame, is characterized in that the driving motor is disposed near the same end of the frame in the hollow, internal space. The end of the frame where the brushing unit is fastened always being the lower end of the frame, there is thus realised a low centre of gravity.

One embodiment of a device for brushing animals according to the invention is characterized in that the transmission element has a recess for removably including the driven axis of the brushing unit. In this manner a worn brushing unit can quickly be removed, which strongly reduces the time for replacing a brushing unit. It is pointed out that, in the known device, the driven axis is fastened on the frame via bearing elements, which bearing elements are fastened on the frame by means of bolts; in this case, dismounting and replacement of a brushing unit take relatively much time. The transmission element is preferably a worm wheel transmission. This makes it possible to realise a cheap and reliable, direct drive of the driven axis.

One embodiment of a device for brushing animals according to the invention is characterized in that the frame is provided with ventilation apertures. This makes it possible for the heat developed by the driving motor to leave the hollow, internal space of the frame, so that the driving motor will not break down because of overheating.

For connection with an external supply source, a wall of the frame is provided with a connector element for connecting thereto a feeder cable for connection with the external supply source. The feeder cable preferably comprises two feeder cable portions, which are interconnected by means of a connecting element, which is fastened on the mounting unit. In this manner there is realised a safe and robust fastening of the feeder cable in the device.

In one embodiment of a device for brushing animals according to the invention, the driving motor is electrically connected with the connector element via a line, the line being completely located in the hollow, internal space of the frame. Possible damage caused to the line by external influences is thus prevented.

In a further embodiment of a device for brushing animals according to the invention, the driving motor is suitable for rotating the drive shaft in two opposite directions of rotation, and the device is provided with a switch mechanism for alternately rotating the drive shaft in the opposite directions of rotation. It has been found that, owing to the fact that the driving motor is rotated in two directions, less wear is caused to the driving motor. The reversal of the direction of rotation can take place at fixed (or variable), periodically established points of time, for example controlled by means of a timer circuit, or can take place at each brushing run. It is pointed out here that, as described in the above-mentioned state of the art, a brushing run is activated by activating a switch that is operatively connected with the driving motor to activate the driving motor when pressure is exerted on the brushing unit. It is further pointed out that a driving motor that is suitable for driving in two opposite directions is known per se from EP-B1-0840547.

The invention will now be described by way of example with reference to an exemplary embodiment shown in the drawing of a device for brushing animals, in which:
Figure 1 is a schematic rear view of a device for brushing animals according to the present invention;
Figure 2 is a, partially cross-sectional, side view of the device for brushing animals shown in Figure 1, and

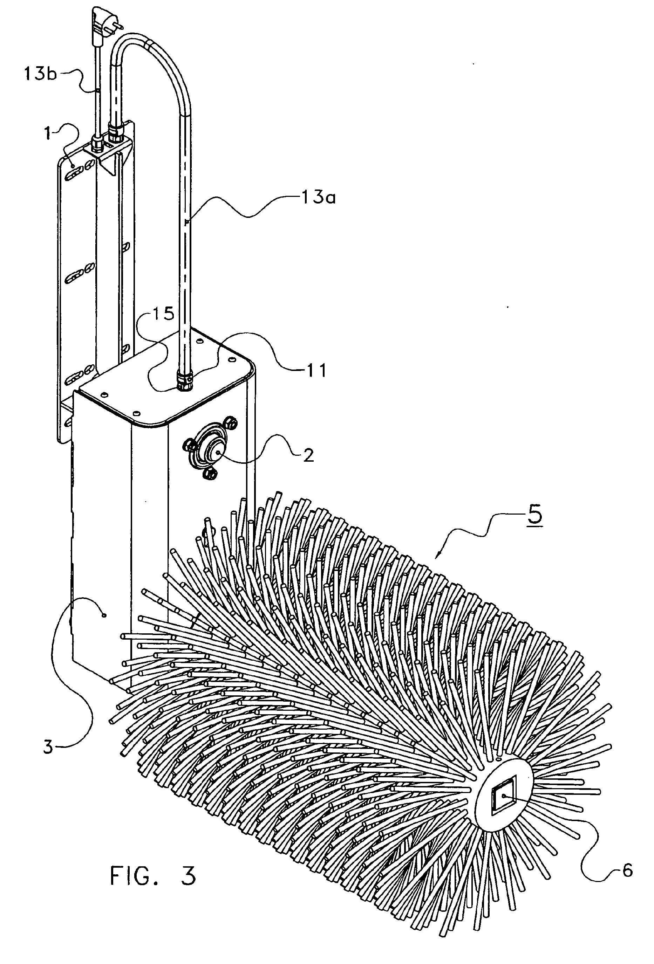

Figure 3 is a schematic perspective view of the device for brushing animals as shown in Figures 1 and 2.

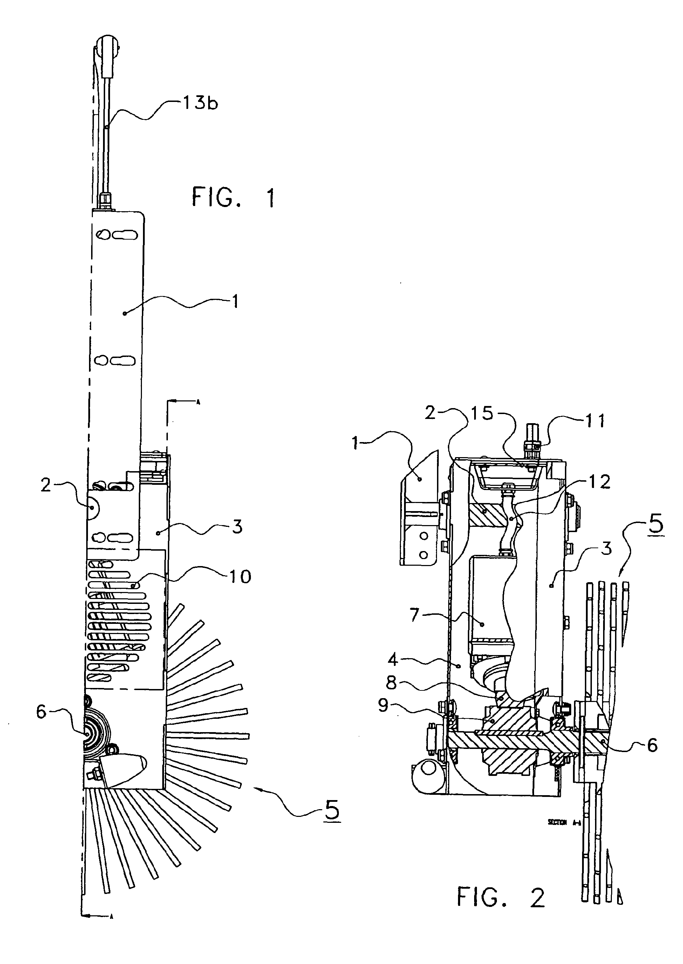

Figure 1 shows a device for brushing animals, such as cows. The device is provided with a mounting unit 1 for mounting the device to a stationary construction element, such as a wall or a beam, of for example a stable. A pivot element 2, for example a rotatable axis, is connected with the mounting unit 1. A frame 3, which is connected with the pivot element 2 in such a way that it is pivotable about said pivot element, comprises a hollow, internal space 4.

A brushing unit 5 is fastened on the frame 3 near an end of said frame 3 and comprises a driven axis 6, which extends into the hollow, internal space 4 of the frame 3. It is pointed out here that by brushing unit is not only meant a unit provided with brush hairs, but also a unit provided with a roll with projections, a unit provided with a roll with sponge-like material, and the like.

A driving motor 7 with a drive shaft 8 for driving the brushing unit 5 is disposed in the hollow, internal space 4 of the frame 3, preferably near the same end of the frame 3 where the brushing unit 5 is disposed.

A transmission element 9, preferably a worm wheel transmission, is disposed between the drive shaft 8 of the driving motor 7 and the driven axis 6 of the brushing unit 5 for transmitting rotation from the drive shaft 8 to the driven axis 6. The transmission element 9 is disposed in the hollow, internal space 4 of the frame 3. It will be obvious that, instead of a worm wheel transmission, other direct transmissions, or for example a chain, rope or belt transmission are also applicable.

The transmission element 9 has a recess for removably including the driven axis 6 of the brushing unit 5, so that, by removing a fastening element, such as a locking pin, the brushing unit 5 can quickly be inserted into and/or quickly be removed from the recess of the transmission element 9.

The frame 3 is provided with ventilation apertures 10, formed by slotted apertures in the exemplary embodiment shown, although any other shape is also applicable, for removing the heat generated by the driving motor 7 from the hollow, internal space 4 of the frame 3. If desired, there can be provided a cooling fan or a fluid cooling.

A wall of the frame 3 is provided with a connector element 11 for connecting thereto a feeder cable, comprising two feeder cable portions 13a, 13b, for connection with an external supply source. The feeder cable portions 13a, 13b are interconnected by means of a connecting element 14, which is fastened on the mounting unit 1. The driving motor 7 is electrically connected with the connector element 11 via a line 12, the line 12 being completely located in the hollow, internal space 4 of the frame 3. Although an electric motor is used in the exemplary embodiment described, the present invention is also applicable while using a pneumatic or hydraulic motor.

A control circuit 15 for controlling the driving motor 7 is included in a housing in the hollow, internal space 4 of the frame 3. The driving motor 7, which is preferably suitable for rotating the drive shaft 8 in two opposite directions of rotation, is controlled by a switch mechanism of the control circuit 15 in such a way that the drive shaft 8 is alternately rotated in opposite directions. This reversal of the direction of rotation can be controlled by a timer circuit located in the control circuit 15. The direction of rotation can also be reversed after each brushing run. It is pointed out here that, as described in USA patent 6,318,298 B1, a brushing run is activated by activating a switch that is operatively connected with the driving motor 7 to activate the driving motor 7 when pressure is exerted on the brushing unit 5 by a cow. The switch mechanism can also have an alarm function: there is switched a potential-free contact if a temperature protection is switched on or in case of failure of the power supply.

## Claims

1. A device for brushing animals, such as cows, which device is provided with:
- a mounting unit (1) for mounting the device to a stationary construction element, such as a wall or a beam,
- a pivot element (2), which is connected with the mounting unit (1),
- a frame (3), which is connected with the pivot element (2) in such a way that it is pivotable about said pivot element, the frame (3) comprising a hollow, internal space (4),
- a brushing unit (5), which is fastened on the frame (3), and comprises a driven axis (6), which extends into the hollow, internal space (4) of the frame (3),
- a driving motor (7) with a drive shaft (8) for driving the brushing unit (5), and
- a transmission element (9) disposed between the drive shaft (8) of the driving motor (7) and the driven axis (6) of the brushing unit (5) for transmitting rotation from the drive shaft (8) to the driven axis (6), the transmission element (9) being disposed in the hollow, internal space (4) of the frame (3),
**characterized in that** the driving motor (7) is disposed in the hollow, internal space (4) of the frame (3).

2. A device for brushing animals as claimed in claim 1, the brushing unit (5) being fastened near an end of the frame (3), **characterized in that** the driving motor (7) is disposed near the same end of the frame (3) in the hollow, internal space (4).

3. A device for brushing animals as claimed in claims 1 and 2, **characterized in that** the transmission element (9) has a recess for removably including the driven axis (6) of the brushing unit (5).

4. A device for brushing animals as claimed in any one of the preceding claims, **characterized in that** the transmission element (9) is a worm wheel transmission.

5. A device for brushing animals as claimed in any one of the preceding claims, **characterized in that** the frame (3) is provided with ventilation apertures (10).

6. A device for brushing animals as claimed in any one of the preceding claims, **characterized in that** a wall of the frame (3) is provided with a connector element (11) for connecting thereto a feeder cable (13a, 13b) for connection with an external supply source.

7. A device for brushing animals as claimed in claim 6, **characterized in that** the feeder cable comprises two feeder cable portions (13a, 13b), which are interconnected by means of a connecting element (14), which is fastened on the mounting unit (1).

8. A device for brushing animals as claimed in claim 6 or 7, **characterized in that** the driving motor (7) is electrically connected with the connector element (11) via a line (12), the line (12) being completely located in the hollow, internal space (4) of the frame (3).

9. A device for brushing animals as claimed in any one of the preceding claims, **characterized in that** the driving motor (7) is suitable for rotating the drive shaft (8) in two opposite directions of rotation, and **in that** the device is provided with a switch mechanism (15) for alternately rotating the drive shaft (8) in the opposite directions of rotation.

## Patentansprüche

1. Vorrichtung zum Bürsten von Tieren, wie z. B. Kühen, wobei die Vorrichtung versehen ist mit:
- einer Montageeinheit (1) zum Montieren der Vorrichtung an einem stationären Konstruktionselement, wie z. B. einer Wand oder einem Träger,
- einem Schwenkelement (2), das mit der Montageeinheit (1) verbunden ist,
- einem Rahmen (3), der mit dem Schwenkelement (2) derart verbunden ist, dass er um das Schwenkelement schwenkbar ist, wobei der Rahmen (3) einen hohlen Innenraum (4) umfasst,
- einer Bürsteinheit (5), die an dem Rahmen (3) befestigt ist und eine angetriebene Welle (6) umfasst, die sich in den hohlen Innenraum (4) des Rahmens (3) erstreckt,
- einem Antriebsmotor (7) mit einer Antriebswelle (8) zum Antreiben der Bürsteinheit (5) und
- einem Übertragungselement (9), das zwischen der Antriebswelle (8) des Antriebsmotors (7) und der angetriebenen Welle (6) der Bürsteinheit (5) angeordnet ist, um die Drehung von der Antriebswelle (8) auf die angetriebene Welle (6) zu übertragen, wobei das Übertragungselement (9) in dem hohlen Innenraum (4) des Rahmens (3) angeordnet ist,
**dadurch gekennzeichnet, dass** der Antriebsmotor (7) in dem hohlen Innenraum (4) des Rahmens (3) angeordnet ist.

2. Vorrichtung zum Bürsten von Tieren nach Anspruch 1, wobei die Bürsteinheit (5) nahe einem Ende des Rahmens (3) angeordnet ist,
**dadurch gekennzeichnet, dass** der Antriebsmotor (7) nahe demselben Ende des Rahmens (3) in dem hohlen Innenraum (4) angeordnet ist.

3. Vorrichtung zum Bürsten von Tieren nach den Ansprüchen 1 und 2, **dadurch gekennzeichnet, dass** das Übertragungselement (9) eine Ausnehmung aufweist, in der die angetriebene Welle (6) der Bürsteinheit (5) lösbar anzuordnen ist.

4. Vorrichtung zum Bürsten von Tieren nach einem der vorhergehenden Ansprüche,
**dadurch gekennzeichnet, dass** das Übertragungselement (9) durch ein Schneckenradgetriebe gebildet ist.

5. Vorrichtung zum Bürsten von Tieren nach einem der vorhergehenden Ansprüche,
**dadurch gekennzeichnet, dass** der Rahmen (3) mit Belüftungsöffnungen (10) versehen ist.

6. Vorrichtung zum Bürsten von Tieren nach einem der vorhergehenden Ansprüche,
**dadurch gekennzeichnet, dass** eine Wand des Rahmens (3) mit einem Anschlusselement (11) versehen ist, um daran ein Anschlusskabel (13a, 13b) zum Anschluss an eine externe Stromquelle anzuschließen.

7. Vorrichtung zum Bürsten von Tieren nach Anspruch 6,
**dadurch gekennzeichnet, dass** das Anschlusskabel zwei Anschlusskabelabschnitte (13a, 13b) umfasst, die durch ein Verbindungselement (14) miteinander verbunden sind, das an der Montageeinheit (1) befestigt ist.

8. Vorrichtung zum Bürsten von Tieren nach Anspruch 6 oder 7,
**dadurch gekennzeichnet, dass** der Antriebsmotor (7) mit dem Anschlusselement (11) durch eine Leitung (12) elektrisch verbunden ist, wobei die Leitung (12) vollständig in dem hohlen Innenraum (4) des Rahmens (3) angeordnet ist.

9. Vorrichtung zum Bürsten von Tieren nach einem der vorhergehenden Ansprüche,
**dadurch gekennzeichnet, dass** der Antriebsmotor (7) dazu ausgelegt ist, die Antriebswelle (8) in zwei entgegengesetzte Drehrichtungen zu drehen, und dass die Vorrichtung mit einer Schaltvorrichtung (15) versehen ist, um die Antriebswelle (8) abwechselnd in die entgegengesetzten Drehrichtungen zu drehen.

## Revendications

1. Dispositif destiné à brosser des animaux, tels que les vaches, ledit dispositif comprenant :
une unité de montage (1) destinée à monter le dispositif sur un élément de construction stationnaire, tel qu'un mur ou une poutre,
un élément articulé (2) raccordé à l'unité de montage (1),
un cadre (3) raccordé à l'élément articulé (2) de telle sorte qu'il pivote autour dudit élément articulé, ledit cadre (3) comprenant un espace intérieur creux (4),
une unité de brossage (5) fixée au cadre (3), et comprenant un axe entraîné (6) qui s'étend dans l'espace intérieur creux (4) du cadre (3),
un moteur d'entraînement (7) comprenant un arbre de transmission (8) pour entraîner l'unité de brossage (5) ; et
un élément de transmission (9) disposé entre l'arbre de transmission (8) du moteur d'entraînement (7) et l'axe entraîné (6) de l'unité de brossage (5) pour transmettre la rotation de l'arbre de transmission (8) à l'axe entraîné (6), l'élément de transmission (9) étant disposé dans l'espace intérieur creux (4) du cadre (3),
**caractérisé en ce que** le moteur d'entraînement (7) est disposé dans l'espace intérieur creux (4) du cadre (3).

2. Dispositif destiné à brosser les animaux selon la revendication 1, l'unité de brossage (5) étant fixée près d'une extrémité du cadre (3), **caractérisé en ce que** le moteur d'entraînement (7) est disposé près de la même extrémité du cadre (3) dans l'espace intérieur creux (4).

3. Dispositif destiné à brosser les animaux selon les revendications 1 et 2, **caractérisé en ce que** l'élément de transmission (9) comprend un encastrement pour insérer de façon amovible l'axe entraîné (6) de l'unité de brossage (5).

4. Dispositif destiné à brosser les animaux selon l'une quelconque des revendications précédentes, **caractérisé en ce que** l'élément de transmission (9) est une transmission à vis sans fin.

5. Dispositif destiné à brosser les animaux selon l'une quelconque des revendications précédentes, **caractérisé en ce que** le cadre (3) comprend des ouvertures de ventilation (10).

6. Dispositif destiné à brosser les animaux selon l'une quelconque des revendications précédentes, **caractérisé en ce qu'**une paroi du cadre (3) comprend un élément de connexion (11) pour raccorder à celui-ci un câble d'alimentation (13a, 13b) pour le raccordement à une source d'alimentation externe.

7. Dispositif destiné à brosser les animaux selon la revendication 6, **caractérisé en ce que** le câble d'alimentation comprend deux parties de câble d'alimentation (13a, 13b) interconnectées au moyen d'un élément de raccordement (14) fixé sur l'unité de montage (1).

8. Dispositif destiné à brosser les animaux selon les revendications 6 ou 7, **caractérisé en ce que** le moteur d'entraînement (7) est raccordé électriquement à l'élément de connexion (11) par une ligne (12), la ligne (12) étant localisée totalement dans l'espace intérieur creux (4) du cadre (3).

9. Dispositif destiné à brosser les animaux selon l'une quelconque des revendications précédentes, **caractérisé en ce que** le moteur d'entraînement (7) est adapté pour faire tourner l'arbre de transmission (8) dans deux sens de rotation opposés, et **en ce que** le dispositif comprend un mécanisme de commutation (15) pour faire tourner alternativement l'arbre de transmission (8) dans les sens de rotation opposés.
